# EUROPÄISCHE PATENTANMELDUNG

(11) **EP 1 559 858 A2**
(43) Veröffentlichungstag der Anmeldung: **03.08.2005**
(21) Anmeldenummer: 05001203.8
(22) Anmeldetag: 21.01.2005
(51) Int. Cl.: E05D 3/06, E05D 11/00, B60R 21/34

(54) **Motorhauben-Scharniermechanismus**

(30) Priorität: 28.01.2004 DE 102004004268; 17.11.2004 DE 202004017841 U
(71) Anmelder: TRW Automotive GmbH, 73553 Alfdorf (DE)
(72) Erfinder: Herpich, Thomas, 73066 Uhingen-Sparwiesen (DE); Birk, Karl, 73061 Ebersbach (DE); Mundal, Stein-Helge, 74417 Gschwend (DE); Diener, Wolfgang, 73529 Schwäbisch Gmünd (DE)
(74) Vertreter: Strass, Jürgen

(57) **Zusammenfassung**

Ein Scharniermechanismus zum Öffnen einer Motorhaube (10) umfaßt mehrere Hebel (16, 18, 20, 22). Die Motorhaube (10) kann durch Überführen des Scharniermechanismus aus einer Normalstellung in eine Öffnungsstellung geöffnet werden. Der Scharniermechanismus umfaßt ferner einen Kraftspeicher und ein Auslöseelement. Nach einer Betätigung des Auslöseelements wird der Scharniermechanismus mit Hilfe des Kraftspeichers aus der Normalstellung unmittelbar in eine Anhebestellung überführt, in der die Motorhaube (10) eine angehobene Position zum Schutz eines Fußgängers einnimmt.

## Beschreibung

Die Erfindung betrifft einen Scharniermechanismus zum Öffnen einer Motorhaube, mit mehreren Hebeln, wobei die Motorhaube durch Überführen des Scharniermechanismus aus einer Normalstellüng in eine Öffnungsstellung geöffnet werden kann.

Um bei einem Kraftfahrzeug mit einem derartigen Scharnier eine zusätzliche Schutzfunktion für Fußgänger zu schaffen, bei der die Motorhaube zur Bereitstellung von zusätzlichem Deformationsraum angehoben wird, mußte bisher das Scharnier entkoppelt und wenigstens ein zusätzliches Gelenk vorgesehen werden. Zudem sind bestimmte Arten von Vorrichtungen zum Anheben der Motorhaube (z.B. pyrotechnische) auch bei einer Fehlauslösung grundsätzlich nur einmal verwendbar, oder sie können nur werkstattseitig mit nicht unerheblichem Aufwand wieder einsatzfähig gemacht werden. Schließlich ist die Funktion solcher sicherheitsrelevanter Vorrichtungen auch bei langem Nichtgebrauch sicherzustellen, was unter Umständen eine regelmäßige Funktionsüberprüfung erfordert.

Aufgabe der Erfindung ist es, einen mit geringem Aufwand realisierbaren Mechanismus zum Anheben einer Motorhaube zu schaffen, der einfach zu handhaben ist, aber dennoch alle sicherheitsrelevanten Anforderungen erfüllt.

Zur Lösung dieser Aufgabe wird vorgeschlagen, einen Scharniermechanismus der eingangs genannten Art so weiterzubilden, daß er einen Kraftspeicher und ein Auslöseelement umfaßt, wobei nach einer Betätigung des Auslöseelements der Scharniermechanismus mit Hilfe des Kraftspeichers aus der Normalstellung unmittelbar in eine Anhebestellung überführt wird, in der die Motorhaube eine angehobene Position zum Schutz eines Fußgängers einnimmt. Grundidee der Erfindung ist es, den Fußgänger-Schutzmechanismus in den Scharniermechanismus zum normalen Öffnen der Motorhaube zu integrieren. Die Kraft zum Anheben der Motorhaube liefert der Kraftspeicher, der auch für den normalen Öffnungsvorgang der Haube benutzt werden kann. Durch die besondere Auslegung des Scharniermechanismus kann auf zusätzliche Bauteile größtenteils verzichtet werden. Ein weiterer wesentlicher Vorteil des erfindungsgemäßen Scharniermechanismus besteht darin, daß die bei einem drohenden Unfall erforderlichen Bauteile zum Anheben der Motorhaube bei jedem normalen Öffnen und Schließen der Motorhaube mitbewegt werden, so daß die Gefahr eines Verklemmens oder Festsitzens erheblich verringert ist. Eine Funktionsüberprüfung kann durch Öffnen der Haube auf einfache Weise vorgenommen werden.

Der Kraftspeicher umfaßt vorzugsweise ein Federelement, insbesondere eine Spiralfeder oder eine Druckfeder 56, die die notwendige Kraft zum Anheben der Motorhaube ohne Verzögerung zur Verfügung stellen kann und reversibel einsetzbar ist.

Eine Weiterbildung der Erfindung sieht vor, daß der Scharniermechanismus in eine Spannstellung gebracht werden kann, aus der er durch eine Bewegung der Motorhaube unter gleichzeitigem Spannen des Federelements zurück in die Normalstellung gebracht werden kann. Eine solche Ausgestaltung des Scharniermechanismus, die die Reversibilität der Fußgänger-Schutzvorrichtung gewährleistet, erweist sich als besonders vorteilhaft, weil der Scharniermechanismus nach einer möglichen Fehlauslösung ohne besonderen Aufwand vom Fahrer selbst für einen weiteren Einsatz vorbereitet werden kann.

Gemäß einer bevorzugten Ausführungsform der Erfindung umfaßt der Scharniermechanismus wenigstens vier Hebel und vier Gelenke, wobei
- ein an den Kraftspeicher gekoppelter erster Hebel an einem fahrzeugfesten ersten Gelenk gelagert ist,
- ein an die Motorhaube gekoppelter zweiter Hebel über ein zweites Gelenk an den ersten Hebel gekoppelt ist,
- ein dritter Hebel über ein drittes Gelenk an den ersten Hebel gekoppelt ist, und
- ein ebenfalls an die Motorhaube gekoppelter vierter Hebel über ein viertes Gelenk an den dritten Hebel gekoppelt ist.

Damit der Scharniermechanismus nach dem "Aufladen" des Kraftspeichers (Spannen der Spiralfeder) unter normalen Umständen in der Normalstellung verharrt und nur in einem Auslösefall aktiviert wird, ist vorgesehen, daß ein am vierten Hebel angeordneter Ansatz in der Normalstellung des Scharniermechanismus durch das Auslöselement in einer fahrzeugfesten Position gehalten und nach Betätigung des Auslöseelements freigegeben wird.

Das Auslöseelement ist vorzugsweise ein um ein fahrzeugfestes fünftes Gelenk umlegbarer Sicherungshebel, der am Ansatz des vierten Hebels angreift.

Alternativ kann der Scharniermechanismus auch als Eingelenker mit zwei Drehpunkten sowie einer an einem Karosserieteil befestigten Grundplatte, einer Haubenaufnahme und einem Schwenkhebel ausgebildet sein.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine Seitenansicht eines erfindungsgemäßen Scharniermechanismus in Normalstellung;
- Figur 2 den Scharniermechanismus aus Figur 1 in Öffnungsstellung;
- Figur 3 den Scharniermechanismus aus Figur 1 in Anhebestellung;
- Figur 4 den Scharniermechanismus aus Figur 1 in Spannstellung; und
- Figuren 5a, 5b, 5c bis 9a, 9b, 9c perspektivische Ansichten weiterer Ausführungsformen des erfindungsgemäßen Scharniermechanismus, jeweils in Normalstellung, Öffnungsstellung und Anhebestellung.

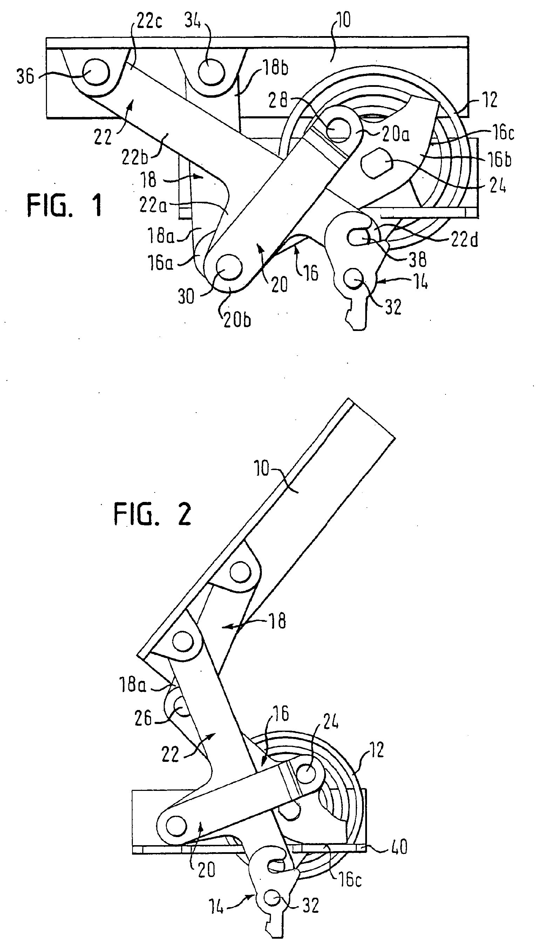

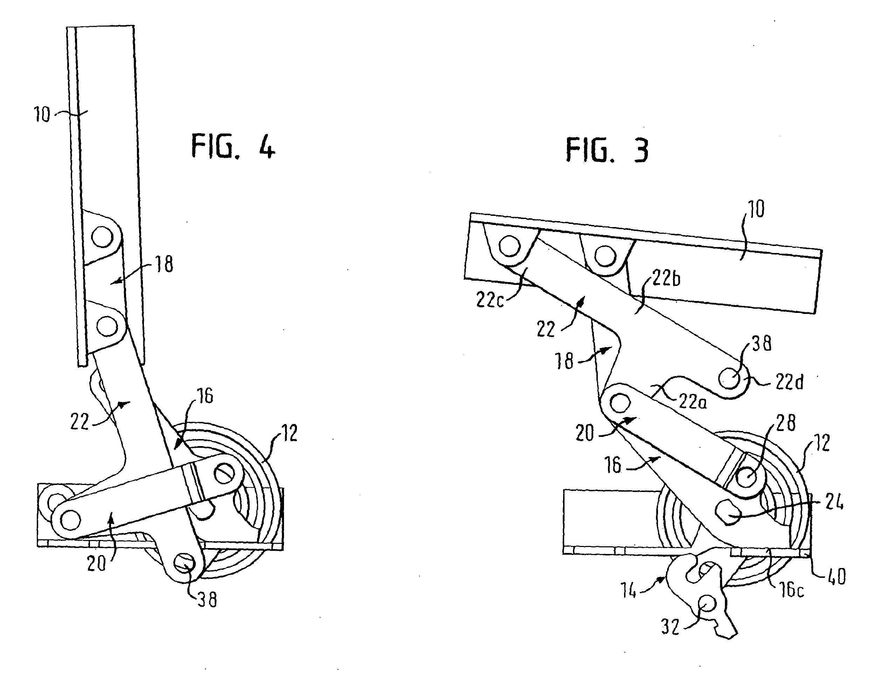

In Figur 1 ist ein erfindungsgemäßer Scharniermechanismus in Normalstellung, d.h. bei geschlossener Motorhaube 10 dargestellt. Der Scharniermechanismus umfaßt neben einem als Kraftspeicher dienenden Federelement in Form einer Spiralfeder 12 und einem Auslöseelement in Form eines Sicherungshebels 14 einen ersten Hebel 16, einen zweiten Hebel 18, einen dritten Hebel 20 und einen vierten Hebel 22 sowie ein erstes Gelenk 24, ein (in Figur 1 verdecktes, jedoch in Figur 2 sichtbares) zweites Gelenk 26, ein drittes Gelenk 28, ein viertes Gelenk 30, ein fünftes Gelenk 32, ein sechstes Gelenk 34 und ein siebtes Gelenk 36.

Der erste Hebel 16 weist ein erstes Ende 16a und ein zweites Ende 16b mit einer Abstützfläche 16c auf. Zwischen seinen Enden 16a und 16b ist der erste Hebel 16 an dem fahrzeugfesten ersten Gelenk 24 drehbar gelagert und so an die vorgespannte Spiralfeder 12 gekoppelt, daß er - gemäß der Darstellung in Figur 1 ― dazu tendiert, sich im Uhrzeigersinn zu drehen. An das erste Ende 16a des ersten Hebels 16 ist über das zweite Gelenk 26 ein erstes Ende 18a des zweiten Hebels 18 gekoppelt. Das entgegengesetzte zweite Ende 18b des zweiten Hebels 18 ist über das sechste Gelenk 34 an die Motorhaube 10 gekoppelt. Ein erstes Ende 20a des dritten Hebels 20 ist über das in etwa auf Höhe des ersten Gelenks 24 befindliche, im Gegensatz zu diesem aber nicht fahrzeugfeste dritte Gelenk 28 an den ersten Hebel 16 gekoppelt. An das entgegengesetzte zweite Ende 20b des dritten Hebels ist über das vierte Gelenk 30 das äußere Ende des Fußabschnitts 22a des T-förmigen vierten Hebels 22 gekoppelt. Ein erstes Ende 22c des Querabschnitts 22b des vierten Hebels 22 ist über das siebte Gelenk 36 an die Motorhaube 10 gekoppelt. Am entgegengesetzten zweiten Ende 22d des Querabschnitts 22b weist der vierte Hebel 22 einen Ansatz 38 auf, an dem der Sicherungshebel 14 angreift. In der Normalstellung hält der um das fahrzeugfeste fünfte Gelenk 32 umlenkbare Sicherungshebel 14 das zweite Ende 22d des Querabschnitts 22b des vierten Hebels 22 in der in Figur 1 gezeigten Position.

Beim Öffnen der Motorhaube 10 verbleibt der Sicherungshebel 32, wie in Figur 2 gezeigt, in der gleichen Position wie in der Normalstellung des Scharniermechanismus. Der erste Hebel 16 wird, unterstützt durch die Federkraft der Spiralfeder 12, um das fahrzeugfeste erste Gelenk 24 im Uhrzeigersinn gedreht, bis er mit seiner Abstützfläche 16c auf einer fahrzeugfesten Anlagefläche 40 zu liegen kommt und sich dort abstützt. Der Scharniermechanismus nimmt dann die in Figur 2 gezeigte Öffnungsstellung ein, in der die Motorhaube 10 gegen den Uhrzeigersinn verschwenkt ist. Je nach Auslegung der Masse der Motorhaube 10 und der Kennlinie der Spiralfeder 12 kann auf eine zusätzliche Gasdruckfeder oder dergleichen zur Unterstützung des Öffnungsvorgangs ganz verzichtet werden. Beim Schließen der Motorhaube 10 wird der Scharniermechanismus wieder in die in Figur 1 gezeigte Stellung überführt.

Um bei einem drohenden Unfall die Motorhaube 10 aus der Normalstellung in die in die Figur 3 gezeigte Position zum Schutz eines aufprallenden Fußgängers anzuheben, wird der Sicherungshebel 14 über einen nicht dargestellten Auslösemechanismus gegen den Uhrzeigersinn um das fahrzeugfeste fünfte Gelenk 32 umgelenkt, so daß der Ansatz 38 und damit das zweite Ende 22d des Querabschnitts 22b des vierten Hebels 22 freigegeben wird. Durch die Kraft der Spiralfeder 12 wird der erste Hebel 16 wiederum im Uhrzeigersinn gedreht, bis er mit seiner Abstützfläche 16c auf der Anlagefläche 40 zu liegen kommt und sich dort abstützt. Da das zweite Ende 22d des Querabschnitts 22b des vierten Hebels 22 freigegeben ist, wird der Scharniermechanismus in die in Figur 3 gezeigte Stellung überführt, in der die Motorhaube 10 eine angehobene, aber im wesentlichen waagrechte Position einnimmt. Die Kraft eines auf die Motorhaube 10 prallenden Fußgängers kann je nach Auslegung der Spiralfeder 12 zumindest teilweise von dieser selbst oder von einem für diesen Zweck vorgesehenen deformierbaren Bauteil aufgenommen werden.

Nach dem Anheben der Motorhaube 10 kann die Spiralfeder 12 wieder gespannt werden. Um die dafür nötige Kraft aufzubringen, wird die Motorhaube 10 gegen den Uhrzeigersinn in eine zur Horizontalen im wesentlichen senkrechte Position verschwenkt, so daß der Scharniermechanismus die in Figur 4 gezeigte Stellung einnimmt. So kann die Motorhaube 10 mit ihrer gesamten Gewichtskraft als Hebel genutzt werden, um den ersten Hebel 16 gegen den Uhrzeigersinn zu drehen und dadurch die Spiralfeder 12 zu spannen. Nach dem Umlegen des Sicherungshebels (in Figur 4 nicht dargestellt) zur Sicherung des Ansatzes 38 und dem Zurückschwenken der Motorhaube 10 befindet sich der Scharniermechanismus wieder in Normalstellung und steht für einen neuerlichen Einsatz bereit.

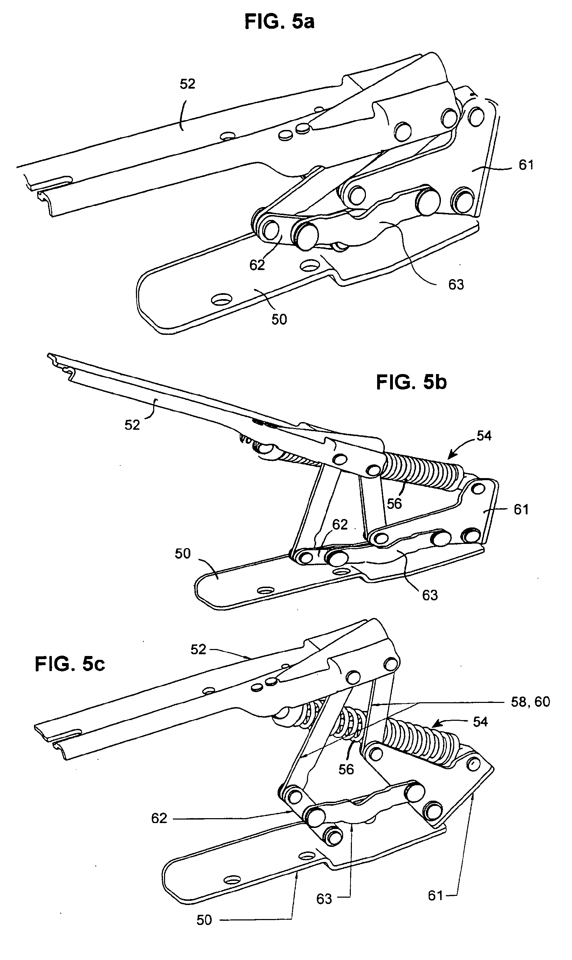

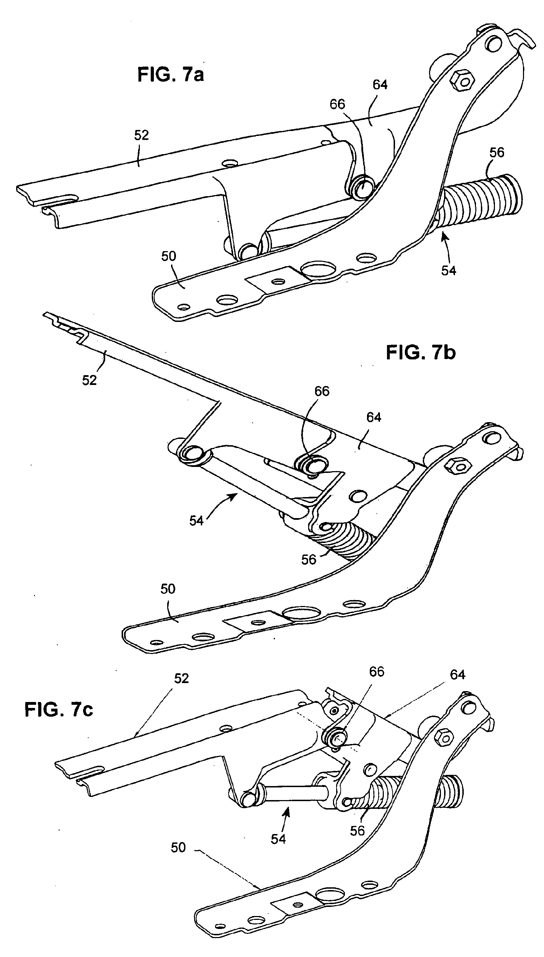

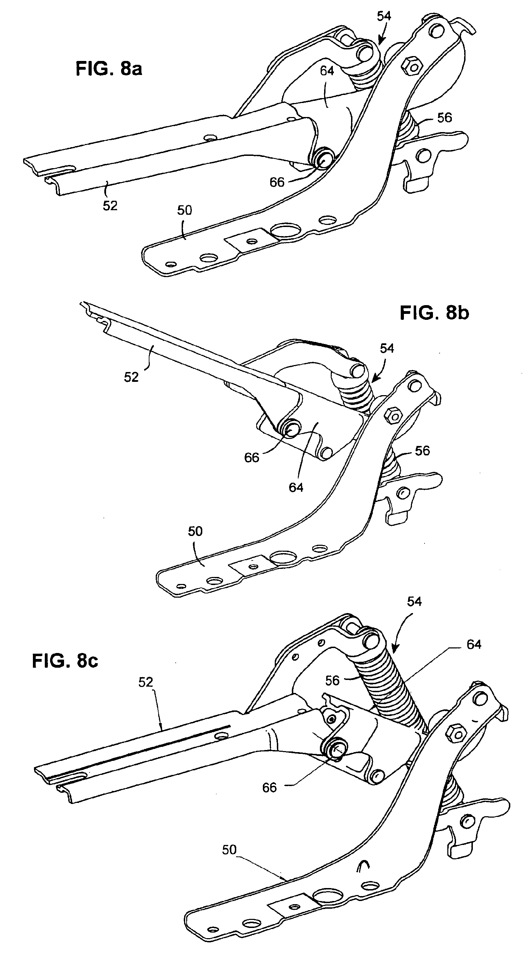

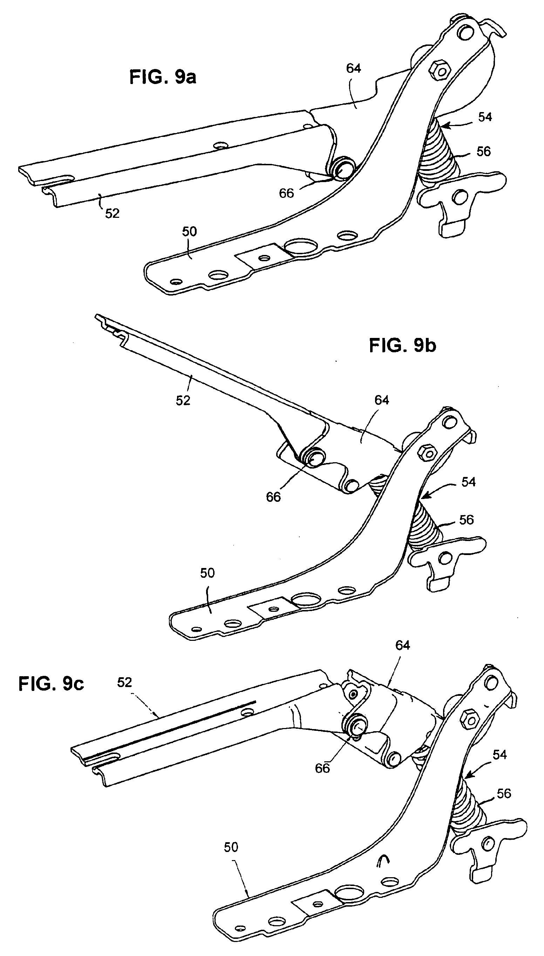

In den Figuren 5a, 5b, 5c bis 9a, 9b, 9c sind fünf weitere Ausführungsformen des erfindungsgemäßen Scharniermechanismus dargestellt, jeweils in Normalstellung (geschlossene Motorhaube), Öffnungsstellung (geöffnete Motorhaube) und Anhebestellung (Fußgängerschutzfunktion). Alle diese Ausführungsformen weisen eine Grundplatte 50, die an einem unbeweglichen Karosserieteil des Fahrzeugs befestigt ist, und eine Haubenaufnahme 52 auf, die fest mit der Motorhaube verbunden ist. Außerdem ist bei diesen Ausführungsformen jeweils ein Federbein 54 vorgesehen, d.h. der Kraftspeicher ist hier als Druckfeder 56 ausgeführt. Bei keiner der Ausführungsformen ist ein manuelles Eingreifen in den Scharniermechanismus notwendig, um diesen wieder für eine Anhebung der Motorhaube einsatzfähig zu machen.

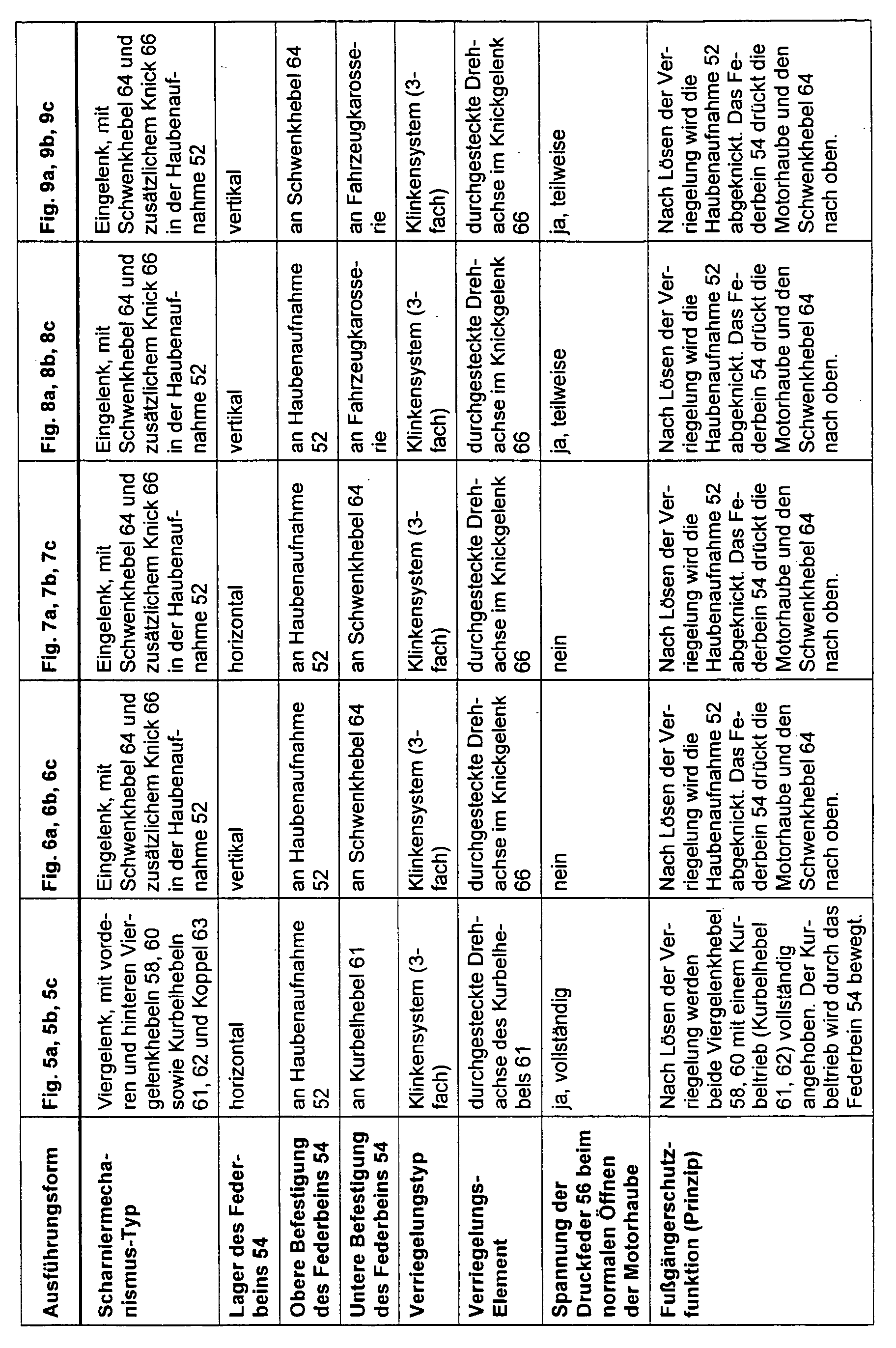

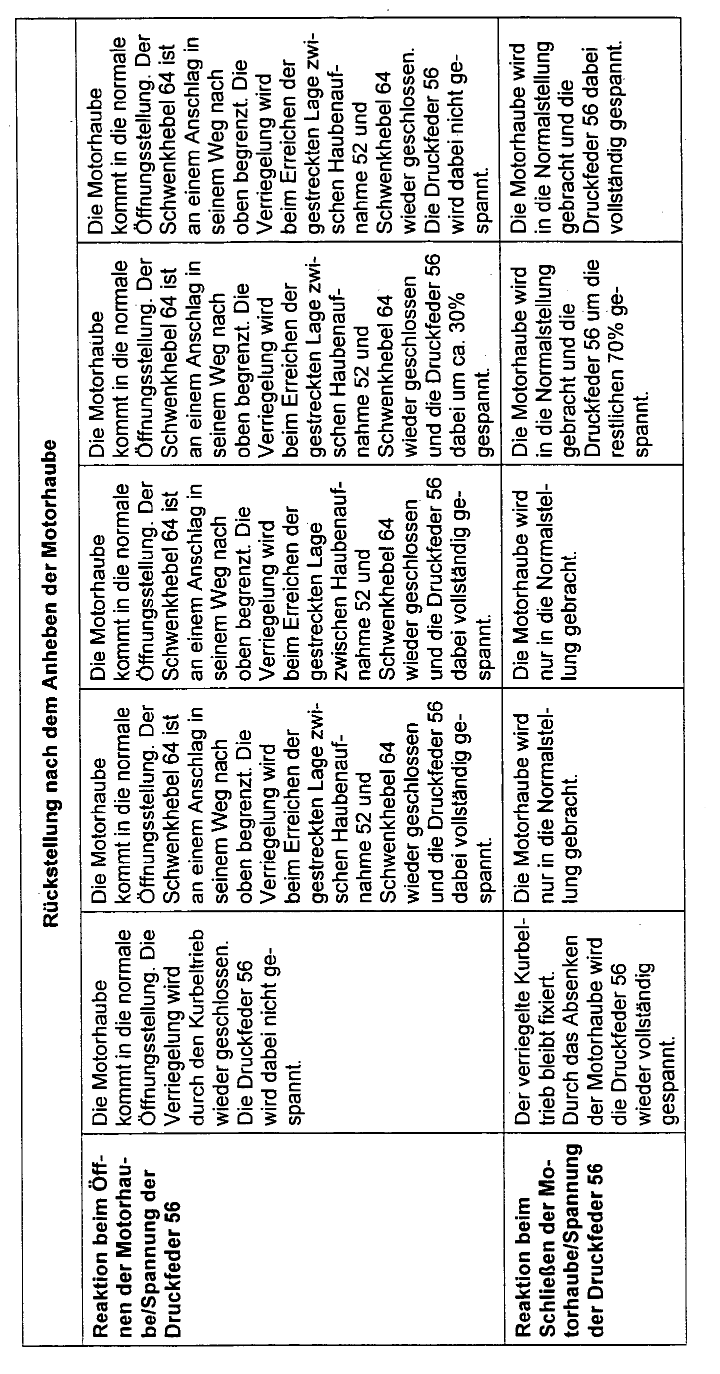

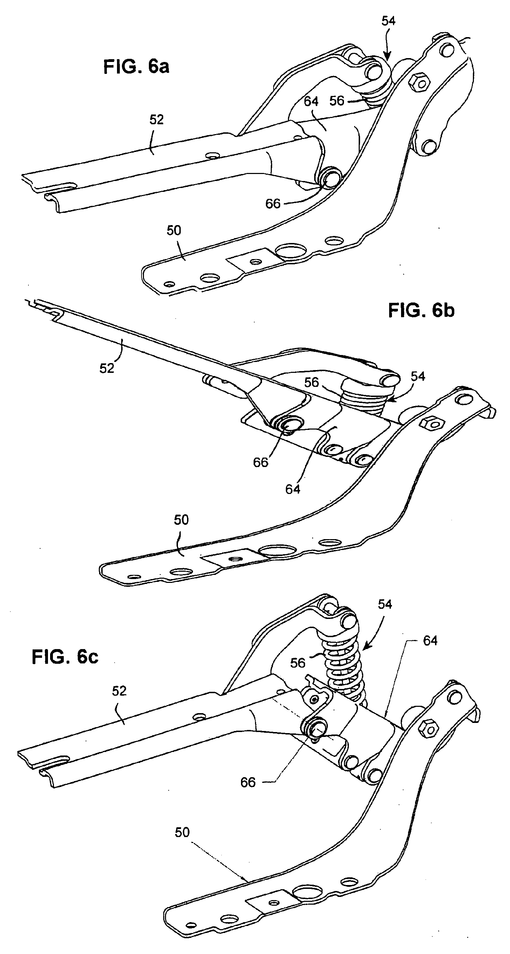

Bei den Scharniermechanismen vom Typ Eingelenk sind folgende Merkmale von besonderer Bedeutung für die Funktionalität:
- Der Haltemechanismus (z.B. eine elektromagnetische Vorrichtung) wird bei der Freigabe mitbewegt.
- Die Anordnung des Federbeins 54 kann horizontal oder vertikal sein.
- Beide Lagerpunkte der Druckfeder 56 des Federbeins 54 können sich mitbewegen.
- Der Haltemechanismus für die Druckfeder 56 kann durch Freigabe eines Drehmoments ermöglicht werden.
- Die Druckfeder 56 kann zusätzlich ortsfest am Fahrzeug angebunden sein.
- Bei den Ausführungsformen der Figuren 5a bis 5c und 6a bis 6c kann die Druckfeder 56 zusätzlich das Öffnen der Motorhaube 10 unterstützen.

Vorteilhaft ist die Bewegung der Gelenke (Drehpunkte) beim normalen Öffnen der Motorhaube 10, um ein Festsetzen der Gelenke zu vermeiden.

## Patentansprüche

1. Scharniermechanismus zum Öffnen einer Motorhaube (10), mit mehreren Hebeln (16, 18, 20, 22), wobei die Motorhaube (10) durch Überführen des Scharniermechanismus aus einer Normalstellung in eine Öffnungsstellung geöffnet werden kann, **dadurch gekennzeichnet, daß** der Scharniermechanismus einen Kraftspeicher und ein Auslöseelement umfaßt, wobei nach einer Betätigung des Auslöseelements der Scharniermechanismus mit Hilfe des Kraftspeichers aus der Normalstellung unmittelbar in eine Anhebestellung überführt wird, in der die Motorhaube (10) eine angehobene Position zum Schutz eines Fußgängers einnimmt.

2. Scharniermechanismus nach Anspruch 1, **dadurch gekennzeichnet, daß** der Kraftspeicher ein Federelement, insbesondere eine Spiralfeder (12) oder eine Druckfeder (56) umfaßt.

3. Scharniermechanismus nach Anspruch 2, **dadurch gekennzeichnet, daß** der Scharniermechanismus in eine Spannstellung gebracht werden kann, aus der er durch eine Bewegung der Motorhaube (10) unter gleichzeitigem Spannen des Federelements zurück in die Normalstellung gebracht werden kann.

4. Scharniermechanismus nach einem der vorhergehenden Ansprüche, **dadurch gekennzeichnet, daß** der Scharniermechanismus wenigstens vier Hebel und vier Gelenke umfaßt, wobei
- ein an den Kraftspeicher gekoppelter erster Hebel (16) an einem fahrzeugfesten ersten Gelenk (24) gelagert ist,
- ein an die Motorhaube (10) gekoppelter zweiter Hebel (18) über ein zweites Gelenk (26) an den ersten Hebel (16) gekoppelt ist,
- ein dritter Hebel (20) über ein drittes Gelenk (28) an den ersten Hebel (16) gekoppelt ist, und
- ein ebenfalls an die Motorhaube (10) gekoppelter vierter Hebel (22) über ein viertes Gelenk (30) an den dritten Hebel (20) gekoppelt ist.

5. Scharniermechanismus nach Anspruch 4, **dadurch gekennzeichnet, daß** ein am vierten Hebel (22) angeordneter Ansatz (38) in der Normalstellung des Scharniermechanismus durch das Auslöseelement in einer fahrzeugfesten Position gehalten und nach Betätigung des Auslöseelements freigegeben wird.

6. Scharniermechanismus nach Anspruch 5, **dadurch gekennzeichnet, daß** das Auslöseelement ein um ein fahrzeugfestes fünftes Gelenk (32) umlegbarer Sicherungshebel (14) ist, der am Ansatz (38) des vierten Hebels (22) angreift.

7. Scharniermechanismus nach Anspruch 5 oder 6, **dadurch gekennzeichnet, daß** der vierte Hebel T-förmig ausgebildet ist mit einem Fußabschnitt (22a) und einem Querabschnitt (22b), wobei das vierte Gelenk (30) am Fußabschnitt (22a) und der Ansatz (38) an einem Ende (22d) des Querabschnitts (22b) angeordnet ist.

8. Scharniermechanismus nach einem der Ansprüche 1 bis 3, **dadurch gekennzeichnet, daß** der Scharniermechanismus als Eingelenker mit zwei Drehpunkten sowie einer an einem Karosserieteil befestigten Grundplatte (50), einer Haubenaufnahme (52) und einem Schwenkhebel (64) ausgebildet ist.
